# FASCICULE DE BREVET EUROPEEN

(11) **EP 2 877 396 B1**
(45) Date de publication et mention de la délivrance du brevet: **09.05.2018**
(21) Numéro de dépôt: 13739755.0
(22) Date de dépôt: 20.06.2013
(51) Int. Cl.: B64C 3/28, B64D 37/32

(54) **AILE D'AÉRONEF AVEC UN DISPOSITIF DE PROTECTION D'UNE STRUCTURE DE LONGERON AVANT D'UN CAISSON CENTRAL DE LADITE AILE ET D'AU MOINS UN ÉQUIPEMENT SITUÉ DANS LADITE AILE**
FLUGZEUGFLÜGEL MIT EINER SCHUTZVORRICHTUNG FÜR EINEN VORDERHOLM DES FLÜGELS, UND FÜR EINE IM FLÜGEL BEFINDLICHE EINRICHTUNG
AIRCRAFT WING WITH A PROTECTION DEVICE FOR A WING FRONT SPAR AND AT LEAST AN EQUIPMENT LOCATED IN SAID WING

(30) Priorité: 26.07.2012 FR 1257268
(43) Date de publication de la demande: 03.06.2015
(73) Titulaire: Airbus Operations S.A.S., 31060 Toulouse (FR)
(72) Inventeur: DAZET, Francis, F-65220 Tournous Darre (FR)
(74) Mandataire: Santarelli
(86) Numéro de dépôt international: PCT/FR2013/051441
(87) Numéro de publication internationale: WO 2014/016484

(56) Documents cités:
- EP-A1- 1 371 551
- EP-A1- 2 196 309
- EP-A2- 2 130 762
- EP-A2- 2 196 391
- DE-A1-102010 034 305
- FR-A1- 2 918 036
- GB-A- 2 471 408

## Description

L'invention concerne un dispositif de protection d'une structure de longeron avant d'un caisson central d'aile d'aéronef et d'au moins un équipement situé dans cette aile

Au cours d'un vol, les aéronefs sont fréquemment soumis à des impacts d'oiseaux provoquant des dégâts parfois considérables sur la voilure et la pointe avant, et parfois les équipements se trouvant en leur sein.

De façon générale, pour préserver l'intégrité de ces équipements, des blindages sont placés à l'intérieur de chaque aile à proximité du bord d'attaque de manière à protéger notamment les réservoirs placés dans les ailes, ainsi qu'en pointe avant de l'aéronef afin de protéger les pilotes et les instruments de navigation.

Le plus souvent, en particulier en ce qui concerne les bords d'attaque des voilures et des empennages, la surface aérodynamique externe du profil est équipée de raidisseurs internes, métalliques ou composites.

Alternativement ou en combinaison avec cette solution, des blindages sont installés à l'arrière des surfaces aérodynamiques, qu'ils épousent la forme du profil (en C), qu'ils soient plans ou encore qu'ils soient biseautés (en V) de manière à répartir le choc de part et d'autre de leur arête frontale.

Un tel blindage est connu du document EP2196391 A2.

Le document EP2196309 divulgue un bord d'attaque d'une aile d'aéronef présentant un empilement de panneaux multicouches.

Toutefois, il existe des zones de l'aéronef, situées à proximité de l'emplanture de chaque aile qui demeurent souvent sans protection.

En effet, habituellement, la zone interne de chaque aile n'est protégée qu'à partir (dans la direction emplanture/extrémité de l'aile) d'une nervure de jonction du caisson central de l'aile (première nervure).

Or, se trouvent dans cette zone des systèmes hydrauliques ou électriques cheminant à l'avant du longeron tels que des conduits menant au réservoir de kérosène, des conduits de prélèvement d'air chaud issu du moteur.

De tels systèmes peuvent être endommagés dans le cas où un oiseau viendrait briser le longeron, et méritent donc qu'on leur apporte une protection supplémentaire.

Dans cet objectif, l'invention concerne une aile d'aéronef conforme à l'objet de la revendication 1.

Dans une telle aile d'aéronef, le dispositif de protection mis en oeuvre permet de protéger les systèmes situés dans la zone de l'emplanture de l'aile en, bénéficiant d'une robustesse comparable à celles des blindages existants dans les autres zones.

Contrairement aux blindages de l'art antérieur qui étaient placés à proximité des surfaces aérodynamiques ou qui étaient plans, le dispositif proposé par la présente invention est placé à proximité des zones sensibles, en retrait par rapport à la surface aérodynamique et entoure les systèmes sensibles.

Ceci permet non seulement de les protéger davantage, mais également de minimiser la surface de protection, permettant ainsi de gagner en masse sans que cela n'ait de conséquence sur les fonctionnalités du carénage de fuselage.

Enfin, la simplicité de conception du dispositif limite les temps de montage, ce qui est particulièrement appréciable dans une zone où il se fait en ligne d'assemblage finale.

L'ancrage isostatique du dispositif au caisson central de l'aile présente notamment l'avantage de prendre en compte les déformations de la voilure, significatives dans cette zone où elle peut être considérée comme souple.

Plus particulièrement, les moyens de fixation de la surface de blindage au caisson central comprennent une liaison mécanique de la surface de blindage à la première nervure du caisson central à trois degrés de liberté.

Ceci permet notamment de conserver des degrés de libertés dans le plan normal à l'axe du fuselage, là où les déformations sont les plus importantes.

Selon une caractéristique possible, les moyens de fixation de la surface de blindage au caisson central comprennent une liaison mécanique de la surface de blindage à la première nervure du caisson central à deux degrés de liberté.

Dans ce cas, les déplacements dans la direction d'allongement du caisson central peuvent être bloqués.

Selon une caractéristique possible, les moyens de fixation de la surface de blindage au caisson central comprennent une liaison mécanique de la surface de blindage au longeron avant à un seul degré de liberté dans l'axe normal à la première nervure du caisson central.

Une telle fixation prend ainsi en compte la rigidité importante de la voilure dans l'axe du fuselage.

La reprise des efforts de choc dans cette direction sans aucun contact en fonctionnement nominal assurer la diffusion de l'énergie du choc du dispositif vers la structure primaire du fuselage pour une meilleure absorption de cette dernière.

Contrairement aux dispositifs de l'art antérieur dont la surface de blindage est situé au voisinage du bord d'attaque de l'aile, la surface de blindage est avantageusement située à proximité immédiate du longeron avant du caisson central et/ou dudit au moins un équipement.

Ainsi, selon une caractéristique possible, la surface de blindage est plus proche dudit au moins un équipement que d'une surface d'attaque d'aile.

En plaçant la surface de blindage au plus près des équipements sensibles, ceux-ci sont mieux protégés.

Selon un mode de réalisation particulier, la surface de blindage a une section en forme de C dans le plan de la surface d'intersection.

Selon un autre mode de réalisation, la surface de blindage comprend une arête normale à la surface d'intersection.

La surface de blindage peut donc ainsi présenter une section en forme de V dans le plan de la surface du fuselage délimitée par l'emplanture de l'aile.

Cette forme particulière comportant une lame en son centre, permet de déporter l'oiseau ou tout autre objet heurtant la surface de blindage de chaque côté de l'arête surface, et donc de minimiser l'énergie à contenir par la surface de blindage et la structure primaire de fuselage.

Selon encore un autre mode de réalisation la surface de blindage épouse la forme dudit au moins un équipement.

Dans tous les cas, de par sa forme, la surface de blindage permet de faire cheminer les systèmes (équipements) d'air, d'hydraulique et d'électricité à l'intérieur de la surface blindée, et ainsi les sécuriser également par rapport au choc.

Pour faciliter ce cheminent, la surface de blindage présente au moins une ouverture destinée au passage d'au moins un équipement.

De façon optionnelle, le dispositif comprend au moins une liaison supplémentaire liant la surface de blindage à la structure du fuselage de l'aéronef, ladite liaison supplémentaire étant composée d'un ergot faisant saillie à partir de l'arrière de la surface de blindage et d'un crochet de fuselage faisant saillie à partir de la peau du fuselage, lesdits ergot et crochet étant destinés à coopérer l'un avec l'autre.

Pour augmenter l'énergie absorbée par le dispositif, la surface blindée possède une structure comprenant des blindages successifs.

Elle peut par exemple être réalisée dans un alliage d'aluminium à forte résistance et fort allongement.

Afin d'adapter la surface de blindage aux équipements qu'il protège, il peut comporter une épaisseur variable.

L'invention concerne donc une aile d'aéronef comprenant un caisson central et au moins un équipement dans l'espace intérieur de ladite aile.

Cette aile comprend un dispositif de protection dudit au moins un équipement comprenant une surface de blindage s'étendant à l'avant d'un longeron avant du caisson central, depuis la surface d'intersection entre l'aile et le fuselage délimitée par l'emplanture de l'aile, transversalement à ladite surface, jusqu'à une première nervure du caisson central en enveloppant partiellement ledit au moins un équipement.

L'invention concerne enfin un aéronef comprenant une telle aile.

D'autres caractéristiques et avantages apparaîtront au cours de la description qui va suivre, donnée à titre d'exemple non limitatif et faite en référence aux dessins annexés, sur lesquels :
- la figure 1 est une représentation schématique de la coupe, dans le plan de son emplanture, d'une aile d'aéronef qui comprend un dispositif selon l'invention dans un premier mode de réalisation ;
- la figure 2 est une représentation schématique en perspective des éléments de la figure 1 ;
- la figure 3 est une représentation schématique de la coupe, dans le plan de son emplanture, d'une aile d'aéronef au niveau de son emplanture comprenant un dispositif selon l'invention dans un deuxième mode de réalisation ;
- la figure 4 est une représentation schématique du dispositif de protection de la figure 2 dans le plan du longeron avant du caisson central de l'aile ;
- la figure 5 est une représentation schématique de côté de deux points de fixation du dispositif de protection de la figure 4 au longeron avant de l'aile ;
- la figure 6 est une représentation schématique de dessus deux points de fixation du dispositif de protection de la figure 4 au longeron avant de l'aile dans ;
- la figure 7 est une représentation schématique de dessus d'un autre point de fixation du dispositif de protection de la figure 4 ;
- la figure 8 est une représentation schématique en perspective d'un élément de fixation du dispositif ; et
- la figure 9 est une représentation schématique de la section A-A de la figure 4.

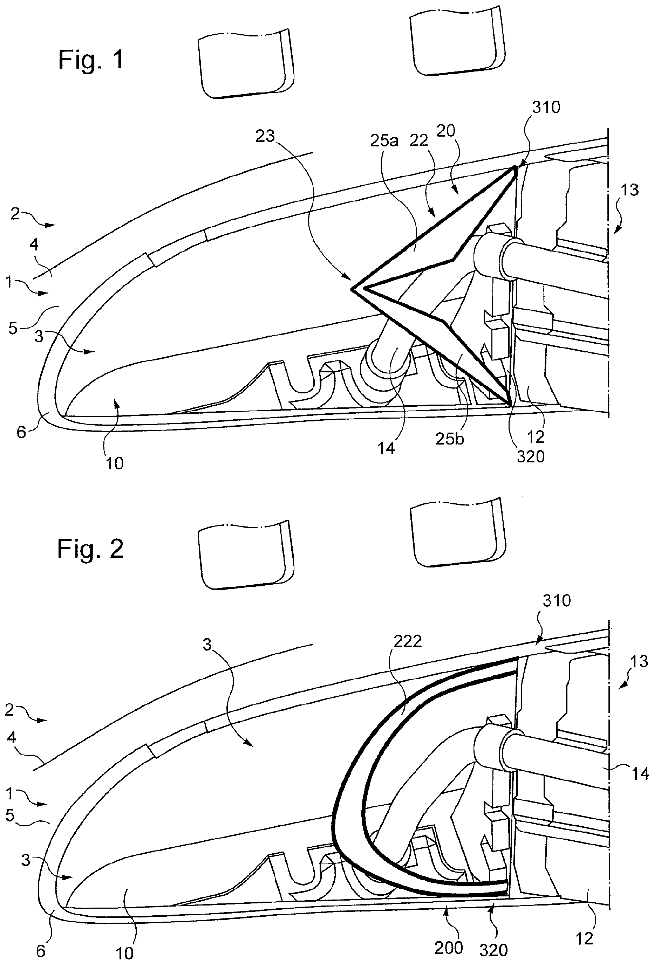

On a représenté à la figure 1 une vue en coupe d'une aile 1 d'aéronef au niveau de son emplanture, c'est-à-dire de sa jonction avec le corps du fuselage 2.

Cette coupe est réalisée dans le plan XZ de l'aéronef, l'axe X représentant l'axe longitudinal du fuselage 2 et l'axe Z étant l'axe vertical lorsque l'aéronef se trouve au sol.

Ce plan correspond notamment au plan dans lequel s'étend la surface d'intersection 3 entre l'aile 1 et le fuselage 2 délimitée par l'emplanture 4.

L'aile 1 présente une surface aérodynamique 5 dont le bord d'attaque 6 est ici représenté à gauche de la figure.

On s'intéresse ici à l'espace interne 10 défini par cette surface aérodynamique et le longeron avant 12 du caisson central 13 de l'aile, qui ne seront pas décrits ici en détail, étant connus de l'homme du métier et pouvant varier dans leur forme d'un aéronef à l'autre.

Dans l'espace interne 10 se trouvent un certain nombre d'équipements qui y cheminent.

Parmi ces équipements, on peut citer, de manière non exhaustive, des tuyaux contenant du carburant, des fils électriques, des tuyaux d'alimentation pour le système de climatisation... etc.

On a ainsi représenté ici un tuyau d'alimentation 14 faisant partie de tels équipements.

Afin de protéger cet équipement, un premier mode de réalisation du dispositif de protection 20 selon l'invention est représenté.

Le dispositif de protection 20 est composé de moyens de fixation au longeron avant 12 (on donnera les détails de cette fixation ci-après) et d'une surface de blindage 22 représentée en coupe sur la figure 1.

Plus précisément, la surface de blindage 22 s'étend à l'avant du longeron avant 12 du caisson central 13, depuis la surface d'intersection 3, transversalement à cette surface d'intersection, jusqu'à une première nervure 24 du caisson central en enveloppant partiellement le tuyau 14.

Ainsi, comme on peut le voir sur les figures 1 et 2, la surface de blindage 22 couvre une zone s'étendant, d'une part, entre le fuselage 2 et la première nervure 24 du caisson central d'aile 1, et d'autre part, de l'extrémité supérieure (selon l'axe Z) du longeron avant 12, jusqu'à l'extrémité inférieure du longeron avant 12..

La surface de blindage 22 présente une arête 23 environ à mi-hauteur du longeron avant 12.

Cette arête 23, située vers l'avant de l'aile (vers le bord d'attaque 6), est normale à la surface d'intersection 3.

Elle divise la surface de blindage 22 en deux surfaces planes, une plaque supérieure 25a et une plaque inférieure 25b, lui donnant une forme en coupe en V.

L'arête 23 agit ainsi comme une lame de couteau permettant de diviser l'oiseau lors de l'impact et diviser par ainsi l'énergie à absorber.

On remarquera que des ouvertures peuvent être pratiquées dans la surface blindée 22 afin de laisser passer certains équipements.

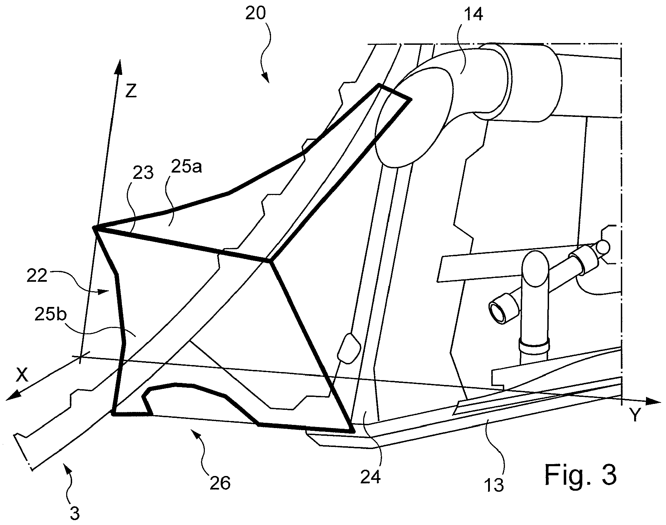

Ainsi, comme on peut le voir sur la figure 3, la plaque inférieure 25b présente une ouverture 26 afin de laisser passer des tuyaux (non représentés).

Ce type d'ouverture permet de laisser passer des systèmes existants sans avoir à les modifier, et ne remet en rien en cause leur protection.

On a représenté à la figure 2 un deuxième mode de réalisation du dispositif de protection selon l'invention.

Dans ce deuxième mode de réalisation, le dispositif de protection 200 remplit la même fonction vis-à-vis des équipements et couvre la même zone de l'espace interne 10.

La forme de sa surface de blindage 222 est toutefois différente car elle bombée.

Elle enveloppe ainsi les équipements tels que le tuyau d'alimentation 14 de manière à présenter une forme en C dans cette vue en coupe (c'est-à-dire dans le plan XZ, ou encore le plan de la surface d'intersection 3).

On notera que l'épaisseur de la surface de blindage 222 peut varier comme c'est le cas sur cette figure où la surface est plus épaisse environ à mi-hauteur du longeron.

Ceci permet avantageusement d'optimiser l'absorption de l'énergie selon l'angle d'impact.

Dans les deux modes de réalisation présentés ci-avant, les parties supérieures et inférieures de la surface de blindage permettent d'évacuer l'oiseau hors de la zone réservoir et des systèmes sensibles vers le haut ou vers le bas, suivant l'orientation du choc.

Quelle que soit la forme du dispositif de protection, les matériaux pouvant constituer la surface du blindage sont de préférence des matériaux absorbants métallique, par exemple en aluminium, ou encore des fibres minérales expansées et rigidifiées. On privilégiera une structure en nid d'abeille (« honeycomb » en terminologie anglo-saxonne).

On va maintenant décrire les moyens de fixation du dispositif de protection selon l'invention au longeron avant 12.

Pour cela, on prendra comme exemple le premier mode de réalisation, sachant que le second mode de réalisation peut présenter un mode de fixation équivalent.

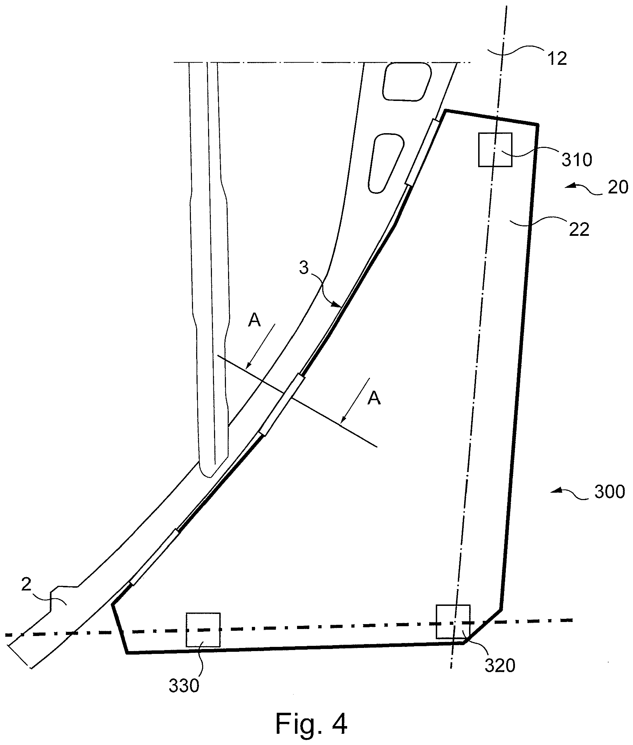

La figure 4 représente la face avant du longeron avant 12 du caisson central de l'aile et les points de fixation de la surface de blindage 22 du dispositif selon l'invention. La surface de blindage 22 est ici représentée en transparence pour des raisons de clarté.

Les blindages capables de contenir des chocs d'énergie importante, sont des éléments de forte rigidité et souvent indéformables hors de la phase de tenue du choc. Il est donc préférable de dissocier la surface de blindage de la structure de l'aéronef tout en préservant la fonction de chacun.

Pour cela, le dispositif de protection selon l'invention comprend des moyens de fixation 300 au longeron avant 12 la structure du caisson central de l'aile répartis en trois points de fixation (ou d'ancrage) qui sont représentés sur les figures 4 à 7.

Le dispositif de protection 20 selon l'invention prévoit, pour fixer la surface de blindage 22 à la structure du fuselage 2 (typiquement une structure souple réalisée en matériaux composites de manière à diminuer sa masse), une liaison de nature isostatique.

Ceci est concrétisé par l'utilisation de trois points de fixation 310, 320 et 330 uniquement associés à des éléments réalisant des liaisons mécaniques 311, 321 et 331 assurant la seule reprise des 6 degrés de libertés : trois en X, deux en Z et un en X en référence au repère représenté sur les figures 4 à 7.

Comme on peut le voir notamment sur la figure 4, le premier point de fixation, ou point de fixation supérieur 310, est situé au niveau de la partie supérieure du caisson central 13, proche de la première nervure 24.

De façon plus précise, le point de fixation supérieur 310 est situé à cheval entre le côté du longeron avant 12 opposé à la surface d'intersection 3 et la première nervure 24 du caisson central 13, au niveau de la partie supérieure du caisson central 13.

Le deuxième point de fixation, ou point de fixation inférieur distal 320, est situé au niveau de la partie inférieure du caisson central 13, proche de la première nervure 24.

De façon plus précise, le point de fixation inférieur distal 320 est situé à cheval entre le côté du longeron avant 12 opposé à la surface d'intersection 3 et la première nervure 24 du caisson central 13, au niveau de la partie inférieure du caisson central 13.

Le troisième point de fixation, ou point de fixation proximal 330, est situé au niveau de la partie inférieure du caisson central 13, proche de la surface d'intersection 3 (proche du fuselage 1).

Cette position correspond à la présence d'une nervure de raidissement du caisson central du fuselage (non représentée).

Les premières et deuxièmes liaisons mécaniques 311, 321 comprennent chacune une paire de ferrures 312a, 312b et 322a, 322b.

On entend ici par paire de ferrures des éléments de renforcement qui relient entre elles deux pièces mobiles l'une par rapport à l'autre suivant un mouvement d'articulation. Ces deux éléments forment une charnière.

La première ferrure arrière 312a, fixée à cheval entre le côté du longeron avant 12 opposé à la surface d'intersection 3 et la première nervure 24 du caisson central 13 au niveau de l'extrémité supérieure la première nervure 24, forme une charnière avec la ferrure avant 312b qui s'insère entre les mors de la ferrure arrière 312a.

La première ferrure avant 312b est, quant à elle, fixée à la surface arrière de la surface de blindage 22.

Les ferrures arrière et avant 312a, 312b sont reliées par un premier boulon de cisaillement 314, élément qui a l'avantage d'être simple et rapide d'installation.

La première liaison mécanique 311 est configurée de manière à ne permettre les mouvements qu'en X et en Z, c'est à-dire respectivement dans le sens normal à la première nervure 24 et dans le sens d'allongement du caisson central 13, soit verticalement dans le plan de la première nervure 24.

Les mouvements dans le sens horizontal dans le plan de la première nervure 24 sont donc idéalement proscrits, en réalité limités à un déplacement de plus ou moins 1mm.

La deuxième ferrure arrière 322a, fixée à cheval entre le côté du longeron avant 12 opposé à la surface d'intersection 3 et la première nervure 24 du caisson central 13 au niveau de l'extrémité inférieure de la première nervure 24 forme une charnière avec la ferrure avant 322b qui s'insère entre les mors de la deuxième ferrure arrière 322a.

La deuxième ferrure avant 322a est, quant à elle, fixée à la surface arrière de la surface de blindage.

Les ferrures arrière et avant 322a, 322b sont reliées par un premier boulon de cisaillement 324.

En revanche, contrairement à la première liaison mécanique 311, la deuxième liaison mécanique 321 est configurée de manière à permettre les mouvements dans les trois directions X, Y et Z, c'est à-dire à la fois dans le sens normal à la première nervure 24 et dans le plan de cette nervure.

Ceci permet notamment de conserver des degrés de liberté là où les déformations lors du choc seront les plus importantes.

Pour assurer l'isostaticité de l'ensemble des trois liaisons mécaniques 311, 321 et 331, la troisième liaison mécanique 331 ne permet que les déplacements dans le sens normal à la première nervure 24.

Pour cela, la troisième liaison mécanique 331 comprend une troisième ferrure arrière 332a, fixée au longeron 12 au niveau de la partie inférieure du caisson central 13, proche de la surface d'intersection 3 (proche du fuselage 2).

La troisième liaison mécanique 331 comprend également une troisième ferrure avant 332b, fixée à l'arrière de la surface de blindage 22.

Contrairement aux deux liaisons précédentes, les troisièmes ferrures arrière et avant 332a, 332b sont reliées par l'intermédiaire d'une barre 332 située entre les mors des ferrures.

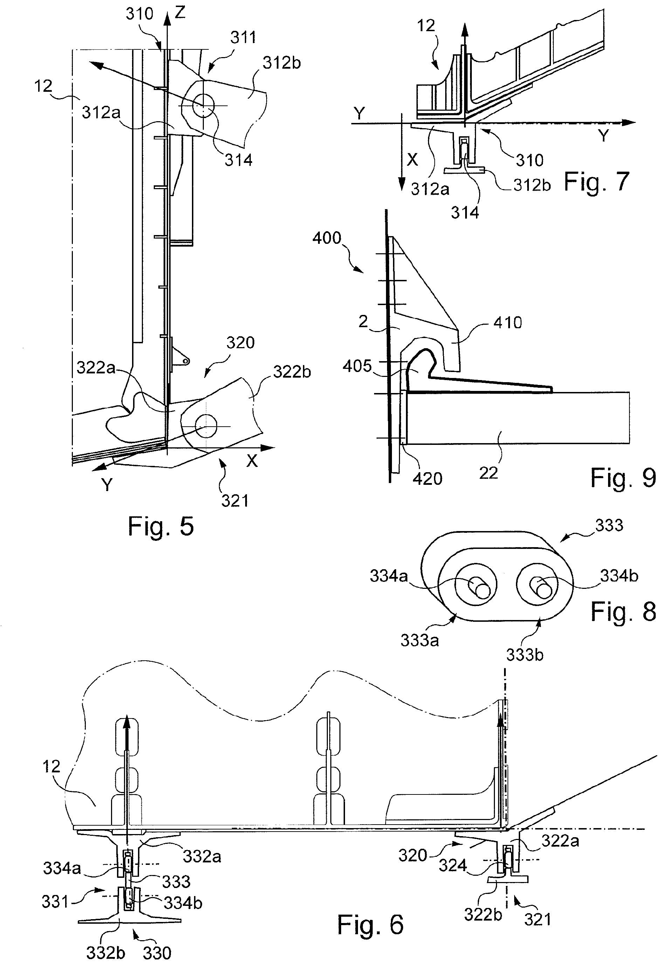

Cette barre, dont on peut voir la forme à la figure 8, comprend deux paliers sphériques 333a et 333b percés respectivement en regard des mors de chacune des ferrures arrière et avant 332a, 332b.

Ces paliers sphériques 333a, 333b sont destinés au passage de deux boulons de cisaillement 334a, 334b qui assurent la liaison entre les troisièmes ferrures et arrière 332a et 332b.

Cette configuration des éléments constituant la troisième liaison mécanique 330 assure le degré de liberté en X, c'est-à-dire dans la direction normale au longeron 12 (qui est la direction normale de la première nervure 24), tout en bloquant les degrés de liberté en Y et en Z.

Plus précisément, dans ces deux dernières directions, les déplacements sont limités à plus ou moins 1 mm.

De façon optionnelle, des liaisons supplémentaires 400 pour lier la surface de blindage 22 à la structure du fuselage 2 peuvent être prévues.

Comme on peut le voir sur la figure 4 où elles sont représentées en coupe, ces fixations sont réparties uniformément au niveau de la jonction entre la surface d'intersection 11 avec le fuselage et le bord interne 410 de la surface blindée 12.

Elles sont par exemple, comme sur la figure 4, au nombre de trois, chiffre qui peut bien sûr varier dans d'autres modes de réalisation.

On a représenté sur la figure 9, qui illustre la coupe A-A de la figure 4, le détail d'une de ces liaisons supplémentaires 400.

Elle comprend un ergot de liaison de blindage 405 qui fait saillie à partir de l'arrière de la surface de blindage 22, de façon normale à cette dernière.

Cet ergot 405 est destiné à coopérer avec un crochet de fuselage 410 qui fait saillie à partir de la peau du fuselage 2, et de façon normale à cette dernière.

L'ergot 405 et le crochet 410 ne sont, hors situation d'impact, pas en contact. Leur présence n'a donc pas d'influence sur l'isostaticité de la liaison entre la surface de blindage 22 et le caisson central 13 de l'aile en situation nominale.

En revanche, lors du choc, les liaisons supplémentaires 400 permettent de transférer une grande quantité d'efforts dans le plan normal au longeron avant 12 (en X) vers la peau du fuselage 2.

Une ou plusieurs des liaisons supplémentaires 400 peuvent être complétées par la pose d'un joint élastomère 420 entre le fuselage et la surface de blindage 22, pour éviter tous frottements entre ces deux éléments générés par les déplacements structuraux et les vibrations.

De préférence, un tel joint est solidaire (par collage) du fuselage 2.

Les exemples qui viennent d'être décrits ne sont que des modes de réalisation possibles de l'invention, qui ne s'y limite pas.

## Revendications

1. Aile d'aéronef comprenant un caisson central (13) et au moins un équipement (14) dans l'espace intérieur de ladite aile, comprenant un dispositif de protection (20) d'une structure de longeron avant (12) dudit caisson central et dudit au moins un équipement (14), ledit dispositif de protection comprenant une surface de blindage (22 ; 222) s'étendant à l'avant dudit longeron avant du caisson central, depuis la surface d'intersection (3) entre l'aile et le fuselage délimitée par l'emplanture de l'aile, transversalement à ladite surface, jusqu'à une première nervure (24) du caisson central en enveloppant partiellement ledit au moins un équipement, **caractérisée en ce que** ledit dispositif de protection comprenant en outre des moyens de fixation (300) de la surface de blindage (22 ; 222) au caisson central (13) réalisant une liaison isostatique.

2. Aile d'aéronef selon la revendication 1, **caractérisée en ce que** les moyens de fixation (300) de la surface de blindage (22 ; 222) au caisson central (13) comprennent une liaison mécanique (320) de la surface de blindage (22 ; 222) à la première nervure (24) du caisson central à trois degrés de liberté.

3. Aile d'aéronef selon l'une des revendications 1 à 2, **caractérisée en ce que** les moyens de fixation (300) de la surface de blindage 22 ; 222) au caisson central (13) comprennent une liaison mécanique (310) de la surface de blindage à la première nervure du caisson central à deux degrés de liberté.

4. Aile d'aéronef selon l'une des revendications 1 à 3, **caractérisée en ce que** les moyens de fixation (300) de la surface de blindage 22 ; 222) au caisson central (13) comprennent une liaison mécanique (330) de la surface de blindage au longeron avant à un seul degré de liberté dans l'axe normal à la première nervure du caisson central.

5. Aile d'aéronef selon l'une des revendications 1 à 4, **caractérisée en ce que** la surface de blindage (22 ; 222) est plus proche dudit au moins un équipement que d'une surface d'attaque d'aile.

6. Aile d'aéronef selon l'une des revendications 1 à 5, **caractérisée en ce que** la surface de blindage (222) a une section en forme de C dans le plan de la surface d'intersection (3).

7. Aile d'aéronef selon l'une des revendications 1 à 5, **caractérisée en ce que** la surface de blindage (22) comprend une arête normale (23) à la surface d'intersection (3).

8. Aile d'aéronef selon l'une des revendications 1 à 5, **caractérisée en ce que** la surface de blindage (22 ; 222) épouse la forme dudit au moins un équipement (14).

9. Aile d'aéronef selon l'une des revendications 1 à 8, **caractérisée en ce que** la surface de blindage (22 ; 222) présente au moins une ouverture (26) destinée au passage d'au moins un équipement (14).

10. Aile d'aéronef selon l'une des revendications 1 à 9, **caractérisée en ce qu'**il comprend au moins une liaison supplémentaire (400) liant la surface de blindage (22 ; 222) à la structure du fuselage de l'aéronef, ladite liaison supplémentaire étant composée d'un ergot (405) faisant saillie à partir de l'arrière de la surface de blindage (22 ; 222) et d'un crochet (410) de fuselage faisant saillie à partir de la peau du fuselage, lesdits ergot et crochet étant destinés à coopérer l'un avec l'autre.

11. Aile d'aéronef selon l'une des revendications 1 à 10, **caractérisée en ce que** la surface de blindage (22 ; 222) possède une structure comprenant des blindages successifs réalisée dans un alliage d'aluminium à forte résistance et fort allongement.

12. Aile d'aéronef selon l'une des revendications 1 à 11, **caractérisée en ce qu'**il comprend une épaisseur variable.

13. Aéronef comprenant une aile selon l'une quelconque des revendications précédentes.

## Patentansprüche

1. Flugzeugflügel, umfassend einen Mittelkasten (13) und mindestens eine Einrichtung (14) im Innenraum des Flügels, umfassend eine Schutzvorrichtung (20) eines Vorderholms (12) des Mittelkastens und der mindestens einen Einrichtung (14), wobei die Schutzvorrichtung eine Aussteifungsfläche (22; 222) umfasst, die sich vor dem Vorderholm des Mittelkastens von der Schnittfläche (3) zwischen dem Flügel und dem Rumpf, der von der Flügelwurzel begrenzt wird, quer zu dieser Fläche bis zu einer ersten Rippe (24) des Mittelkastens erstreckt, wobei sie die mindestens eine Einrichtung teilweise umgibt, **dadurch gekennzeichnet, dass** die Schutzvorrichtung ferner Mittel zum Befestigen (300) der Aussteifungsfläche (22; 222) am Mittelkasten (13) umfassend, die eine isostatische Verbindung herstellen.

2. Flugzeugflügel nach Anspruch 1, **dadurch gekennzeichnet, dass** die Mittel zum Befestigen (300) der Aussteifungsfläche (22; 222) am Mittelkasten (13) eine mechanische Verbindung (320) der Aussteifungsfläche (22; 222) mit der ersten Rippe (24) des Mittelkastens mit drei Freiheitsgraden umfassen.

3. Flugzeugflügel nach einem der Ansprüche 1 bis 2, **dadurch gekennzeichnet, dass** die Mittel zum Befestigen (300) der Aussteifungsfläche (22; 222) am Mittelkasten (13) eine mechanische Verbindung (310) der Aussteifungsfläche mit der ersten Rippe des Mittelkastens mit zwei Freiheitsgraden umfassen.

4. Flugzeugflügel nach einem der Ansprüche 1 bis 3, **dadurch gekennzeichnet, dass** die Mittel zum Befestigen (300) der Aussteifungsfläche (22; 222) am Mittelkasten (13) eine mechanische Verbindung (330) der Aussteifungsfläche mit dem Vorderholm mit nur einem Freiheitsgrad in der Achse senkrecht zur ersten Rippe des Mittelkastens umfassen.

5. Flugzeugflügel nach einem der Ansprüche 1 bis 4, **dadurch gekennzeichnet, dass** sich die Aussteifungsoberfläche (22; 222) näher an der mindestens einen Einrichtung befindet als an einer Flügelvorderfläche.

6. Flugzeugflügel nach einem der Ansprüche 1 bis 5, **dadurch gekennzeichnet, dass** die Aussteifungsfläche (222) in der Ebene der Schnittfläche (3) einen C-förmigen Querschnitt aufweist.

7. Flugzeugflügel nach einem der Ansprüche 1 bis 5, **dadurch gekennzeichnet, dass** die Aussteifungsfläche (22) eine Kante (23) senkrecht zur Schnittfläche (3)aufweist.

8. Flugzeugflügel nach einem der Ansprüche 1 bis 5, **dadurch gekennzeichnet, dass** die Aussteifungsfläche (22; 222) der Form der mindestens einen Einrichtung (14) eng folgt.

9. Flugzeugflügel nach einem der Ansprüche 1 bis 8, **dadurch gekennzeichnet, dass** die Aussteifungsfläche (22; 222) mindestens eine Öffnung (26) für den Durchgang der mindestens einen Einrichtung (14) aufweist.

10. Flugzeugflügel nach einem der Ansprüche 1 bis 9, **dadurch gekennzeichnet, dass** er mindestens eine zusätzliche Verbindung (400) umfasst, die die Aussteifungsfläche (22; 222) mit der Rumpfstruktur des Flugzeugs verbindet, wobei die zusätzliche Verbindung aus einer Nase (405) besteht, die von der Rückseite der Aussteifungsfläche (22; 222) vorsteht, und aus einem Rumpfhaken (410), der aus der Rumpfhaut vorsteht, wobei die Nase und der Haken dazu bestimmt sind, zusammenzuwirken.

11. Flugzeugflügel nach einem der Ansprüche 1 bis 10, **dadurch gekennzeichnet, dass** die Aussteifungsfläche (22; 222) eine Struktur aufweist, die aufeinander folgende Aussteifungen umfasst, die aus einer Aluminiumlegierung mit hoher Beständigkeit und starker Dehnung hergestellt sind.

12. Flugzeugflügel nach einem der Ansprüche 1 bis 11, **dadurch gekennzeichnet, dass** er eine variable Dicke umfasst.

13. Flugzeug, umfassend einen Flügel nach einem der vorhergehenden Ansprüche.

## Claims

1. Aircraft wing comprising a central casing (13) and at least one item of equipment (14) in the internal space of said wing, comprising a protection device (20) for a front spar structure (12) of said central casing and for said at least one item of equipment (14), said protection device comprising a shielding surface (22; 222) extending in front of said front spar of the central casing, from the surface of intersection (3) between the wing and the fuselage delimited by the wing root, transversely to said surface, to a first rib (24) of the central casing partially surrounding said at least one item of equipment, **characterised in that** said protection device further comprising means (300) for fixing the shielding surface (22; 222) to the central casing (13) producing an isostatic link.

2. Aircraft wing according to claim 1, **characterised in that** the means (300) for fixing the shielding surface (22; 222) to the central casing (13) comprise a mechanical link (320) from the shielding surface (22; 222) to the first rib (24) of the central casing with three degrees of freedom.

3. Aircraft wing according to either of claims 1 and 2, **characterised in that** the means (300) for fixing the shielding surface (22; 222) to the central casing (13) comprise a mechanical link (310) from the shielding surface to the first rib of the central casing with two degrees of freedom.

4. Aircraft wing according to one of claims 1 to 3, **characterised in that** means (300) for fixing the shielding surface (22; 222) to the central casing (13) comprise a mechanical link (330) from the shielding surface to the front spar with a single degree of freedom in the axis normal to the first rib of the central casing.

5. Aircraft wing according to one of claims 1 to 4, **characterised in that** the shielding surface (22; 222) is closer to said at least one item of equipment than to a leading wing surface.

6. Aircraft wing according to one of claims 1 to 5, **characterised in that** the shielding surface (222) has a C-shaped section in the plane of the surface of intersection (3).

7. Aircraft wing according to one of claims 1 to 5, **characterised in that** the shielding surface (22) comprises an edge (23) normal to the surface of intersection (3).

8. Aircraft wing according to one of claims 1 to 5, **characterised in that** the shielding surface (22; 222) closely follows the form of said at least one item of equipment (14).

9. Aircraft wing according to one of claims 1 to 8, **characterised in that** the shielding surface (22; 222) has at least one opening (26) intended for the passage of at least one item of equipment (14).

10. Aircraft wing according to one of claims 1 to 9, **characterised in that** it comprises at least one additional link (400) linking the shielding surface (22; 222) to the structure of the fuselage of the aircraft, said additional link consisting of a lug (405) protruding from the rear of the shielding surface (22; 222) and a fuselage hook (410) protruding from the skin of the fuselage, said lug and hook being intended to cooperate with one another.

11. Aircraft wing according to one of claims 1 to 10, **characterised in that** the shielding surface (22; 222) has a structure comprising successive shieldings produced in a high-strength aluminum alloy with strong elongation.

12. Aircraft wing according to one of claims 1 to 11, **characterised in that** it has a variable thickness.

13. Aircraft comprising a wing according to any one of the preceding claims.
